# EUROPÄISCHE PATENTSCHRIFT

(11) **EP 0 499 781 B1**
(45) Veröffentlichungstag und Bekanntmachung des Hinweises auf die Patenterteilung: **30.03.1994**
(21) Anmeldenummer: 92100395.0
(22) Anmeldetag: 11.01.1992
(51) Int. Cl.: F02M 31/16

(54) **Kraftstoffkreislauf mit thermostatgesteuerter Kraftstoffvorwärmung für vorzugsweise luftverdichtende Einspritzbrennkraftmaschinen**
Fuel circulation with thermostatically controlled fuel-preheating, particularly for air-compressing fuel injection-type internal combustion engines
Circulation de carburant avec préchauffage de carburant réglé par thermostat, spécialement pour moteurs à combustion interne à compression d'air et à injection de carburant

(30) Priorität: 20.02.1991 DE 4105232
(43) Veröffentlichungstag der Anmeldung: 26.08.1992
(73) Patentinhaber: MERCEDES-BENZ AG, 70327 Stuttgart (DE)
(72) Erfinder: Conrad, Ulrich, D-7144 Asperg (DE); Niemeier, Gerd, D-7000 Stuttgart 61 (DE); Betke, Lucian, D-7000 Stuttgart 1 (DE)

(56) Entgegenhaltungen:
- EP-A- 0 094 885
- EP-A- 0 301 959
- DE-C- 3 538 360
- US-A- 4 387 692

## Beschreibung

Die Erfindung betrifft einen Kraftstoffkreislauf mit thermostatgesteuerter Kraftstoffvorwärmung für vorzugsweise luftverdichtende Einspritzbrennkraftmaschinen nach den im Oberbegriff des Patentanspruchs 1 angegebenen Merkmalen.

Kraftstoffkreisläufe mit Maßnahmen zur Erwärmung des Kraftstoffes sind hinlänglich bekannt. In der EP 0 258 529 A2 sind z.B. ein Wärmetauscher und ein Umschaltventil gezeigt, die zu einer Baueinheit zusammengefaßt und in einer Kühlwasser- und Kraftstoffleitung zwischengeschaltet sind. Im Wärmetauscher mit Anschlßstutzen für den Wassereintritt und Wasseraustritt verlaufen getrennt voneinander liegende Kanäle für das Kühlwasser und für den vom benachbarten Umschaltventil gesteuerten Kraftstoff.

Der Erfindung liegt die Aufgabe zugrunde, die gattungsgemäße thermostatgesteuerte Kraftstoffvorwärmung zu vereinfachen bei gleichzeitiger Verringerung des Gewichts und Raumbedarfs, ohne dabei eine rasche Aufheizung des Kraftstoffes zu beeinträchtigen.

Zur Lösung dieser Aufgabe dienen erfindungsgemäß die im Kennzeichen des Patentanspruchs 1 angegebenen Merkmale.

Durch die besondere Anordnung der aus Wärmetauscher und Umschaltventil bestehenden Baueinheit, nämlich den vom Umschaltventil abragenden Wärmetauscher in den im Zylinderkopf verlaufenden Kühlwasserstrom einzutauchen, entfallen die außenliegenden Kühlwasserleitungen. Außerdem wird nur der Bauraum für das vom Zylinderkopf in den Motorraum abragende Umschaltventil mit den Kraftstoffleitungen benötigt.

Ferner ergeben sich bei dem kompakten und somit platzsparenden Wärmetauscher mit einem Einsatzkörper als Trennkörper verschiedene Kammern, welche nacheinander von Kraftstoff durchströmt werden. Es ergeben sich große Kontaktflächen sowie eine längere Verweildauer des Kraftstoffes im Wärmetauscher, durch die eine rasche Aufheizung des Kraftstoffes sichergestellt ist.

Aus der US-PS 4 387 692 ist zwar eine Ausführung bekannt, einen Wärmetauscher in den im Zylinderkopf verlaufenden Kühlwasserstrom einzutauchen, jedoch besteht der Wärmetauscher aus einem U-förmig gebogenen Leitungsabschnitt als Teil einer vom Tank zum Vergaser führenden durchgehenden Kraftstoffzuführleitung.

In den Unteransprüchen sind noch förderliche Weiterbildungen der Erfindung angegeben.

Durch die besondere Befestigungsart ist es möglich, bei einem Defekt des Thermostaten das Umschaltventil auf einfache Weise auszutauschen, ohne den Wärmetauscher auszubauen. Kühlwasser kann beim Austausch nicht auslaufen.

In der Zeichnung ist der Gegenstand der Erfindung dargestellt und anhand von zwei Ausführungsbeispielen näher beschrieben. Es zeigen:
- Fig. 1: einen Kraftstoffkreislauf mit thermostatgesteuerter Kraftstoffvorwärmung
- Fig. 2: in vergrößertem Maßstab eine andere Ausgestaltung der Kraftstoffvorwärmung und
- Fig. 3: den Kraftstoffvorwärmer im Schnitt nach der Linie III-III in Fig. 2

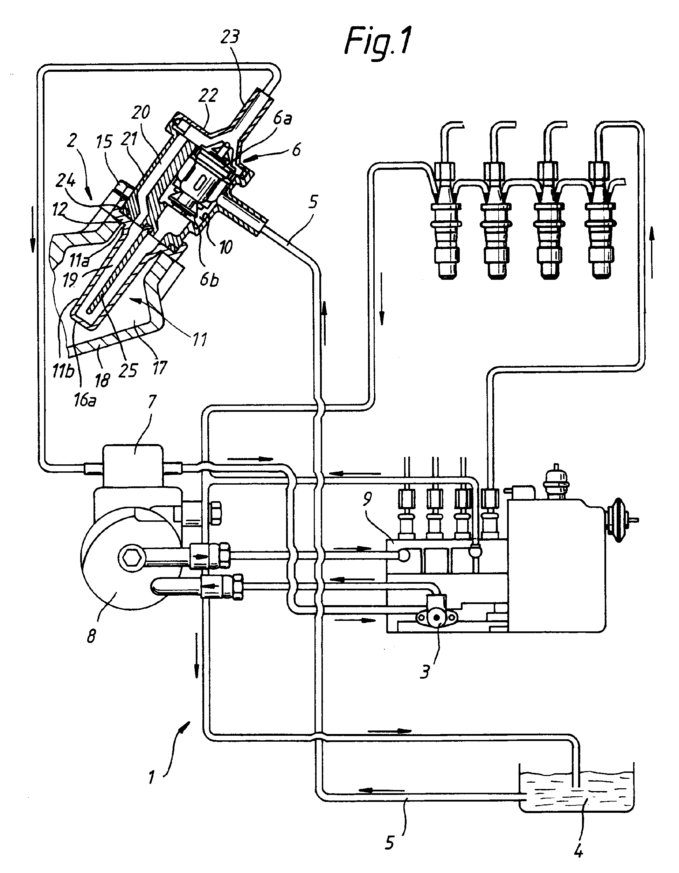

In Fig. 1 ist ein Kraftstoffkreislauf 1 mit thermostatgesteuerter Kraftstoffvorwärmung 2 für eine luftverdichtende Einspritzbrennkraftmaschine gezeigt, bei der eine Förderpumpe 3 Kraftstoff aus dem Kraftstoffbehälter 4 durch eine Vorlaufleitung 5 über ein kraftstofftemperaturabhängig gesteuertes Umschaltventil 6 sowie über ein Vorfilter 7 saugt und über ein Hauptfilter 8 zur Kraftstoffeinspritzpumpe 9 fördert.

Das Umschaltventil 6 ist als doppeltwirkendes Tellerventil mit einem Wachsthermostaten als Dehnstoffarbeitselement (nicht näher dargestellt) ausgebildet. Das Tellerventil ist in einer zylindrischen Ausnehmung 10 so geführt, daß dessen einer Ventilteller 6a den direkten Kraftstoffvorlauf und dessen anderer gegenüberliegender Ventilteller 6b den Kraftstoffverlauf über einen im Wege des Kühlmittelstromes liegenden Wärmetauscher 11 steuert. Der Wärmetauscher 11 und das Umschaltventil 6 bilden eine Baueinheit, die einen Befestigungsflansch 12 als Teil des topfförmig ausgebildeten Wärmetauschers 11 an dem dem Umschaltventil 6 zugewandten Ende lla aufweist und mit vier Durchgangsbohrungen 13, 14 für Befestigungsschrauben versehen ist, von denen die mit 15 bezeichneten zwei Befestigungsschrauben nur zur Befestigung des Umschaltventiles 6 und die mit 16 bezeichneten zwei Befestigungsschrauben zur Befestigung von Umschaltventil 6 und Wärmetauscher 11 dienen.

Das aus Leichtmetalldruckguß gefertigte Wärmetauschergehäuse llb ragt vollständig in den Kühlwasserstrom im Kühlwasserkanal 17 des Zylinderkopfes 18 der Brennkraftmaschine hinein. Der Innenraum dieses Gehäuses 16 ist in mehrere Kammern 19 unterteilt, die von Kraftstoff nacheinander durchflossen werden, um eine ausreichende Aufheizung des Kraftstoffes zu ermöglichen. Der erwärmte Kraftstoff tritt durch einen parallel zur zylindrischen Ausnehmung 10 verlaufenden Kraftstoffvorlaufkanal 20 im Gehäuse 21 des Umschaltventiles 6 in den Deckel 22, um von dort aus durch einen deckelseitigen Auslaßstutzen 23 über die Filteranordnung zur Einspritzpumpe 9 zu gelangen.

Das Gehäuse 21 des Umschaltventiles 6 sowie der Deckel 22 sind aus Kunststoff gefertigt und unter Einschluß des Dehnstoffarbeitselementes und Tellerventils miteinander verschweißt, um zusätzliche Befestigungselemente zu vermeiden.

Der Befestigungsflansch 12 ist an seiner innenliegenden Randseite mit einer Aussparung 24 versehen, in die das Gehäuse 21 des Umschaltventiles 6 abdichtend eingepaßt ist.

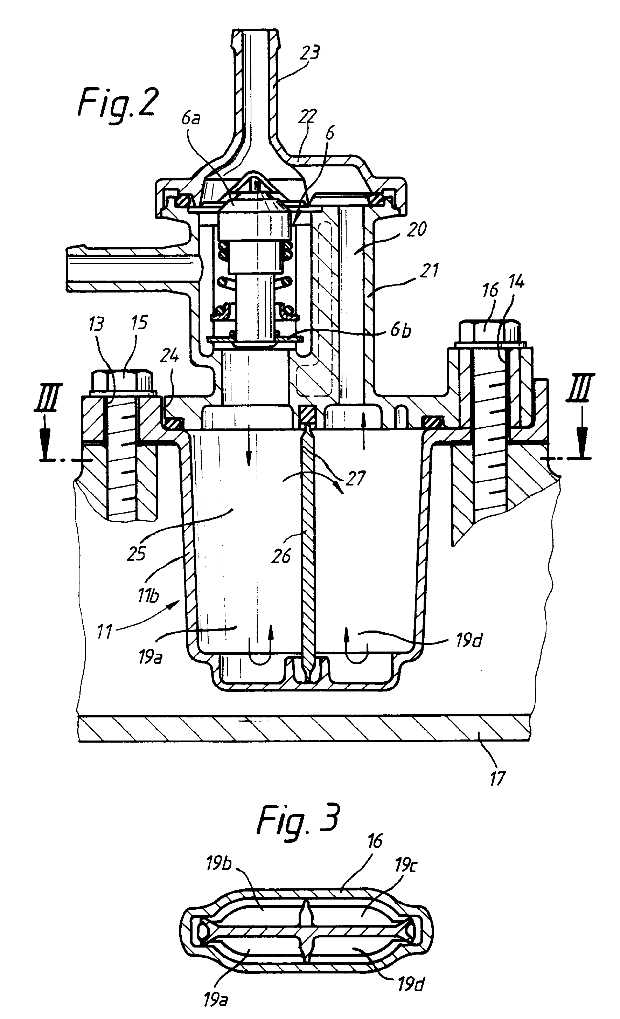

Die Kammern in dem Wärmetauscher 11 sind gemäß Fig. 1 durch einen eingesetzten Trennkörper 25 gebildet, der einerseits mit dem Umschaltventil 6 abdichtend verbunden ist und andererseits mit geringem Abstand bis zum Boden 16a des Wärmetauschergehäuses 16 reicht. In Fig. 2,3 ist eine die Kammern bildende Anordnung getroffen, bei der zusätzlich ein querliegender Trennkörper 26 im Wärmetauschergehäuse 16 vorgesehen ist, so daß der aus dem Umschaltventil 6 austretende Kraftstoff zunächst eine Kammer 19a, dann die Kammer 19b von unten nach oben über einen Durchlaß 27 in der Trennwand 26 und die Kammer 19c sowie die Kammer 19d durchströmt und schließlich in den Kraftstoffvorlaufkanal 20 und Deckel 22 gelangt. Gegebenenfalls kann eine weitere Unterteilung des Gehäuseinnenraumes in eine große Anzahl von Kammern vorgesehen sein, die in der gleichen Weise, wie beschrieben, durchströmt werden. Um einen intensiveren Wärmeaustausch zu ermöglichen, kann z.B. das Wärmetauschergehäuse 16 verrippt ausgeführt sein.

## Patentansprüche

1. Kraftstoffkreislauf mit thermostatgesteuerter Kraftstoffvorwärmung für vorzugsweise luftverdichtende Einspritzbrennkraftmaschinen mit im Zylinderkopf verlaufenden Kühlwasserkanälen, mit einer von einem Kraftstoffbehälter ausgehenden und über ein Kraftstoffilter zu einer Kraftstoffeinspritzpumpe führenden Vorlaufleitung, in der ein kraftstofftemperaturabhängig gesteuertes, bei tiefen Umgebungstemperaturen den Kraftstoff über einen Wärmetauscher leitendes Umschaltventil mit einem Dehnstoffarbeitselement vorgesehen sind, wobei der Wärmetauscher und das Umschaltventil baueinheitlich zusammengefaßt sind,
**dadurch gekennzeichnet,**
daß das Umschaltventil (6) und der lediglich für die Kraftstoffdurchströmung vorgesehene Wärmetauscher (11) am Zylinderkopf derart befestigt sind, daß der Wärmetauscher (11), der topfförmig ausgebildet ist und einen eingesetzten Trennkörper zur Bildung von nacheinander von Kraftstoff durchströmten Kammern (19a,19b,19c,19d) aufweist, in den Kühlwasserkanal (17) im Zylinderkopf (18) hineinragt.

2. Kraftstoffkreislauf nach Anspruch 1,
**dadurch gekennzeichnet,**
daß der Wärmetauscher und das Umschaltventil ineinandergesteckt und über einen Befestigungsflansch (12) am Zylinderkopf (18) befestigt sind.

3. Kraftstoffkreislauf nach Anspruch 2,
**dadurch gekennzeichnet,**
daß der Befestigungsflansch (12) Teil des Wärmetauschergehäuses (16) ist und Durchgangsbohrungen (13,14) für Befestigungsschrauben (15,16) aufweist, von denen ein Teil nur für die Befestigung des Wärmetauschers (11) und der andere Teil für die Befestigung des Wärmetauschers (11) und des Umschaltventiles (6) vorgesehen ist.

4. Kraftstoffkreislauf nach den Ansprüchen 2 oder 3,
**dadurch gekennzeichnet,**
daß in den Befestigungsflansch (12) Aussparungen (24) eingelassen sind zur Lagefixierung des aufliegenden Umschaltventiles 6.

5. Kraftstoffkreislauf nach einem der vorhergehenden Ansprüche, in den das in einer zylindrischen Ausnehmung angeordnete Umschaltventil als doppeltwirkendes Tellerventil ausgebildet ist, dessen einer Ventilteller den direkten Kraftstoffvorlauf und dessen gegenüberliegender Ventilteller den Kraftstoffvorlauf über den Wärmetauscher steuert,
**dadurch gekennzeichnet,**
daß im Umschaltventil (6) parallel zur zylindrischen Ausnehmung (10) ein Kraftstoffvorlaufkanal (20) angeordnet ist, durch den der über den Wärmetauscher geleitete Kraftstoff geführt wird.

## Claims

1. Fuel circuit with thermostat-controlled fuel preheating for preferably air-compressing injection-type internal combustion engines with cooling water ducts extending in the cylinder head, having a supply conduit starting from a fuel tank and leading via a fuel filter to a fuel injection pump, in which supply conduit there is a switch-over valve with an expanding-material operating element, controlled as a function of fuel temperature and guiding the fuel over a heat exchanger at low ambient temperatures, the heat exchanger and the switch-over valve being combined into one structural unit, characterized in that the switch-over valve (6) and the heat exchanger (11) provided, through which only fuel is intended to flow, are fastened to the cylinder head in such a way that the heat exchanger (11), which is of cup-shaped design and has an inserted separating body to form chambers (19a, 19b, 19c, 19d) through which fuel successively flows, protrudes into the cooling water duct (17) in the cylinder head (18).

2. Fuel circuit according to Claim 1, characterized in that the heat exchanger and the switch-over valve are inserted one inside the other and are fastened to the cylinder head (18) by means of a fastening flange (12).

3. Fuel circuit according to Claim 2, characterized in that the fastening flange (12) is part of the heat exchanger casing (16) and has through holes (13, 14) for fastening screws (15, 16), of which some are only provided for fastening the heat exchanger (11) and the others are provided for fastening the heat exchanger (11) and the switch-over valve (6).

4. Fuel circuit according to Claims 2 or 3, characterized in that recesses (24) are let into the fastening flange (12) for the positional fixing of the switch-over valve 6 located on it.

5. Fuel circuit according to one of the preceding claims in which the switch-over valve located in a cylindrical recess is designed as a double-acting plate valve whose one valve plate controls the direct fuel supply and whose opposite valve plate controls the fuel supply via the heat exchanger, characterized in that a fuel supply duct (20) is located in the switch-over valve (6) parallel to the cylindrical recess (10) and fuel guided via the heat exchanger is supplied through the fuel supply duct (20).

## Revendications

1. Circuit de carburant à réchauffage du carburant commandé par thermostat pour moteurs à combustion interne à injection qui, de préférence, compriment l'air, comprenant des canaux à eau de refroidissement passant dans la culasse et un conduit d'alimentation partant d'un réservoir de carburant, menant par l'intermédiaire d'un filtre à une pompe d'injection de carburant et dans lequel sont prévus un distributeur commandé en fonction de la température du carburant et dirigeant le carburant sur un échangeur de chaleur lorsque les températures ambiantes sont basses, ainsi qu'un élément extensométrique, l'échangeur de chaleur et le distributeur étant assemblés en un module, caractérisé en ce que le distributeur (6) et l'échangeur de chaleur (11) prévu uniquement pour le passage du carburant sont fixés sur la culasse de manière que l'échangeur de chaleur (11), qui est en forme de pot et qui comprend un cloisonnement intérieur pour la formation de chambres (19a, 19b, 19c, 19d) par lesquelles le carburant passe successivement, pénètre dans le canal à eau de refroidissement (17) de la culasse (18).

2. Circuit de carburant selon la revendication 1, caractérisé en ce que l'échangeur de chaleur et le distributeur sont emboîtés l'un sur l'autre et sont fixés par une bride de fixation (12) sur la culasse (18).

3. Circuit de carburant selon la revendication 2, caractérisé en ce que la bride de fixation (12) fait partie du boîtier (16) de l'échangeur de chaleur et comporte des trous de traversée (13, 14) pour des vis de fixation (15, 16) dont certaines sont prévues uniquement pour la fixation de l'échangeur de chaleur (11) et les autres, pour la fixation de l'échangeur de chaleur (11) et du distributeur (6).

4. Circuit de carburant selon la revendication 2 ou 3, caractérisé en ce que des évidements (24) sont ménagés dans la bride de fixation (12) pour la fixation en place du distributeur (6) reposant sur cette dernière.

5. Circuit de carburant selon l'une des revendications précédentes, dans lequel le distributeur placé dans une cavité cylindrique est conformé en soupape à diaphragmes à double effet, dont l'un des diaphragmes commande l'alimentation directe en carburant et dont le diaphragme opposé commande l'alimentation en carburant par l'intermédiaire de l'échangeur de chaleur, caractérisé en ce qu'un canal (20) d'alimentation en carburant, par lequel passe le carburant dirigé sur l'échangeur de chaleur, est disposé dans le distributeur (6) parallèlement à la cavité cylindrique (10).
